(19) Europäisches Patentamt
European Patent Office
Office européen des brevets

(11) EP 0 693 530 A2

(12) # EUROPÄISCHE PATENTANMELDUNG

(43) Veröffentlichungstag:
**24.01.1996 Patentblatt 1996/04**

(51) Int. Cl.[6]: **C08L 69/00**, C08L 51/04, C08L 55/02

(21) Anmeldenummer: **95110630.1**

(22) Anmeldetag: **07.07.1995**

(84) Benannte Vertragsstaaten:
**DE FR GB IT**

(30) Priorität: **20.07.1994 DE 4425620**

(71) Anmelder: **BAYER AG**
**D-51368 Leverkusen (DE)**

(72) Erfinder:
- **Köhler, Burkhard, Dr.**
  **D-47829 Krefeld (DE)**
- **Tischer, Werner**
  **D-41542 Dormagen (DE)**
- **Ebert, Wolfgang, Dr.**
  **D-47800 Krefeld (DE)**
- **Weider, Richard, Dr.**
  **D-51381 Leverkusen (DE)**
- **Scholl, Thomas, Dr.**
  **D-51469 Bergisch Gladbach (DE)**
- **Dhein, Rolf, Dr.**
  **D-47800 Krefeld (DE)**

Bemerkungen:
Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(54) **Schlagzähmodifizierte Formmassen auf Basis von Polyisobutylen-haltigem Polycarbonat**

(57) Thermoplastische Formmassen, enthaltend mit Polyisobutylen modifiziertes Polycarbonat, Pfropfpolymerisat und gegebenenfalls Copolymerisat, aromatisches Polycarbonat, Polyolefine.

EP 0 693 530 A2

**Beschreibung**

Die Erfindung betrifft schlagzähmodifizierte Formmassen auf Basis von mit Polyisobutylen (PIB) modifiziertem Polycarbonat und gegebenenfalls weiteren Polymeren.

Mischungen aus Polycarbonat und Pfropfpolymeren sind allgemein bekannt (z.B. DE-A 1 170 141). Diese Mischungen haben eine befriedigende, aber für manche Anwendungen nicht ausreichende Zähigkeit.

Ferner sind mit Polyisobutylen modifizierte Polycarbonate bekannt (z.B. EP-A 305 718, DE-OS 3 618 378 (= US-P 4 798 873)).

Die Aufgabe der vorliegenden Erfindung ist die Bereitstellung von Formmassen auf Basis Polycarbonat und Pfropfpolymeren, gegebenenfalls weiteren Polymeren mit verbessertem Eigenschaftsprofil, insbesondere der Zähigkeit.

Es wurde gefunden, daß Mischungen, die ein mit Polyisobutylen modifiziertes Polycarbonat enthalten, eine besonders hohe Zähigkeit aufweisen.

Gegenstand der vorliegenden Erfindung sind thermoplastische Formmassen, enthaltend

A) 5 bis 90, vorzugsweise 10 bis 80 Gew.-Teile mit Polyisobutylen modifiziertes aromatisches Polycarbonat, wobei der Gewichtsanteil an Polyisobutylen-Telechelen im Gesamtpolymer 1 bis 40, vorzugsweise 2,5 bis 33 Gew.-% beträgt,

B) 10 bis 95, vorzugsweise 20 bis 90 Gew.-Teile Pfropfpolymerisat einer Mischung aus

B.1.1 50 bis 95, vorzugsweise 60 bis 90, Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methacrylat, oder Mischungen dieser Verbindungen und

B.1.2 5 bis 50, vorzugsweise 10 bis 40, Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl- bzw. phenyl-N-substituierte Maleinimide oder Mischungen dieser Verbindungen auf

B.2 5 bis 95, vorzugsweise 20 bis 70, Gew.-Teilen Polymerisat auf Dien- und/oder Alkylacrylat-Basis mit einer Glasübergangstemperatur unter -10°C.

C) 0 bis 20 Gew.-Teile Kautschuk verschieden von B)

D) 0 bis 70 Gew.-Teile eines Copolymerisats aus

D.1 50 bis 98, vorzugsweise 60 bis 95, Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und

D.2 50 bis 2, vorzugsweise 40 bis 5, Gew.-Teilen Acrylnitril, Methacrylntiril, $C_1$-$C_8$-Alkylmethacrylaten, $C_1$-$C_8$-Alkylacrylaten, Maleinsäureanhydrid, N-substituierten Maleinimiden und Mischungen daraus,

E) 0 bis 80 Gew.-Teile aromatisches Polycarbonat,

F) 0 bis 40 Gew.-Teile Polyolefine,

wobei die Summe der Komponenten A + B + C + D + E + F 100 ergibt.

<u>Komponente A</u>

Die mit Polyisobutylen modifizierten Polycarbonate sind literaturbekannt (z.B. EP-A 305 718, DE-OS 3 618 378 bzw. US-P 4 798 873) bzw. nach literaturbekannten Verfahren erhältlich.

Es handelt sich dabei um Polycarbonat-Polyisobutylen-Blockcokondensate aus mit Endgruppen funktionalisierten Polyisobutylenblöcken, sogenannten Polyisobutylentelechelen, (vgl. Römpp, Chemie Lexikon, 9. Auflage, Bd. 6, 1992, Seite 4485) und Polycarbonat-Struktureinheiten, wobei der Anteil der Polyisobutylen-Einheiten 1 bis 40, vorzugsweise 2,5 bis 33, insbesondere 6 bis 33 Gew.-% am Gesamtpolymer beträgt.

Polyisobutylentelechele im Sinne der Erfindung sind vorzugsweise funktionalisierte Polyisobutylentelechele mit im wesentlichen einer Carbonsäure- und einer Ketogruppe, mit im wesentlichen zwei Aminogruppen, primäres oder sekundäres Alkylamino mit im wesentlichen 2 Hydroxygruppen oder im wesentlichen 2 Asparaginsäureestergruppen.

Die PIB/PC-Blockcokondensate haben mittlere Molekulargewichte (Gewichtsmittel, ermittelt durch z.B Gelchromatographie) von 8.000 bis 200.000.

Die Polyisobutylentelechele haben Gewichtsmittelmolekulargewichte $\overline{M}_w$ (ermittelt beispielsweise durch Gelpermeationschromatographie) von 250 bis 500 000, vorzugsweise von 1 000 bis 10 000.

<u>Edukte</u> für die durch Ozonolyse und anschließende Derivatisierung erhältlichen Polyisobutylentelechele mit Amino- oder Hydroxy-Endgruppen sind Copolymerisate aus Isobutylen und 0,5 bis 15 Mol-% Dienen, wie beispielsweise Butadien, Isopren, 2-Chlorbutadien-(1,4), 2-Brom-butadien-(1,4), Pentadien, Hexadien, 2-Ethylbutadien-(1,3), 2-Propylbutadien-(1,3), 2-Phenylbutadien-(1,3), 2,3-Dimethyl-butadien-(1,3), 2-Methylpentadien-(1,3) oder 3-Propoxyhexadien-(1,3). Unter der Bezeichnung Butylkautschuk sind solche Copolymere kommerziell verfügbar. Besonders bevorzugt ist Isopren als Dienmonomer. Die Diene liegen dabei im wesentlichen in der 1,4-Position verknüpft vor. Geringe Anteile 1,2-Verknüpfung, wie sie in allen kommerziell erhältlichen Butylkautschuken vorhanden ist und die sich nicht vollständig unterdrücken läßt, führen zu ebenfalls geringen Anteilen seitenständiger funktioneller Gruppen und damit zu solchen Polymeren mit mehr als 2 funktionellen Gruppen pro Polymerkette.

Die Polyisobutylentelechele enthalten ca. 1,8 bis 2,5, bevorzugt 1,8 bis 2,2, funktionelle Gruppen pro Polymerkette.

Polyisobutylentelechele (Carboxyl als Endgruppe) sind z.B. nach DE-OS 2 147 874 durch Ozonolyse von Polyisobutylen mit geringem Gehalt an Isopren als Comonomer zugänglich.

Polyisobutylentelechele mit im wesentlichen 2 sekundären Aminogruppen sind z.B. nach DE-OS 4 122 655 durch Ozonolyse von Polyisobutylen mit geringem Gehalt an Isopren als Comonomer und anschließender aminierender Hydrierung in Gegenwart primärer Amine erhältlich.

Polyisobutylentelechele mit im wesentlichen 2 Hydroxygruppen sind nach DE-OS 4 122 655 durch Ozonolyse von Polyisobutylen mit geringem Gehalt an Isopren als Comonomer und anschließender Hydrierung zugänglich sind.

Polyisobutylentelechele mit im wesentlichen zwei Asparaginsäureestergruppen sind erhältlich durch Umsetzung eines Polyisobutylentelechels mit im wesentlichen zwei Aminogruppen, das nach DE-OS 4 122 655 durch Ozonolyse von Polyisobutylen mit geringem Gehalt an Isopren als Comonomer und anschließender aminierender Hydrierung in Gegenwart von Ammoniak hergestellt wird, mit Maleinsäureestern oder Fumarsäureestern im Sinne einer Michael Addition.

Bevorzugte aromatische Polycarbonate sind solche auf Basis der Diphenole der Formel (I) und/oder (II)

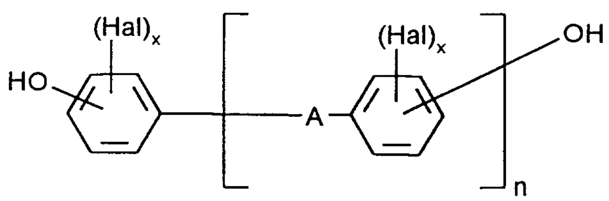

(I)

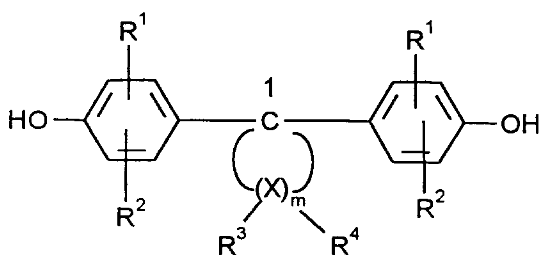

(II)

worin

| | |
|---|---|
| A | eine Einfachbindung, ein $C_1$-$C_5$-Alkylen, ein $C_2$-$C_5$-Alkyliden, ein $C_5$-$C_6$-Cycloalkyliden, -S- oder -$SO_2$-, |
| Hal | Chlor oder Brom, |
| x | 0, 1 oder 2 und |
| n | 1 oder 0 sind, |
| $R^1$ und $R^2$ | unabhängig voneinander Wasserstoff, Halogen, bevorzugt Chlor oder Brom, $C_1$-$C_8$-Alkyl, bevorzugt Methyl oder Ethyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl, vorzugsweise Wasserstoff Methyl oder Ethyl, |

und

X Kohlenwasserstoff bedeuten, mit der Maßgabe, daß an mindestens einem Atom X $R^3$ und $R^4$ gleichzeitig Alkyl bedeuten.

Geeignete Diphenole der Formel (I) sind z.B. Hydrochinon, Resorcin, 4,4'-Di-hydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind Dihydroxydiphenylcycloalkane mit 5 und 6 Ring-C-Atomen im cycloaliphatischen Rest (m = 4 oder 5 in Formel (II)) wie beispielsweise die Diphenole der Formeln

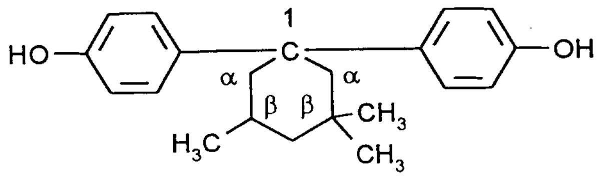

(IIa)

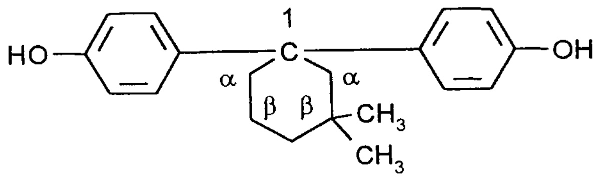

(IIb) und

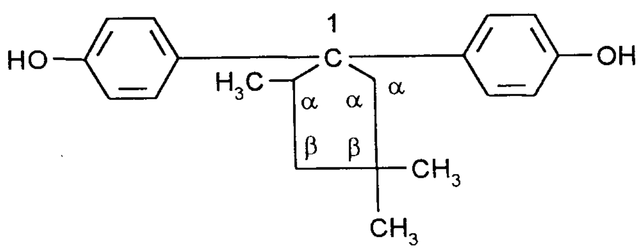

(IIc),

Die Polycarbonate können sowohl Homopolycarbonate als auch Copolycarbonate sowie Mischungen sein.

Die Herstellung der erfindungsgemäß geeigneten Polycarbonate gemäß Komponente A ist literaturbekannt und kann z.B. mit Phosgen nach dem Phasengrenzflächenverfahren oder mit Phosgen nach dem Verfahren in homogener Phase, dem sogenannten Pyridinverfahren, erfolgen, wobei das jeweils einzustellende Molekulargewicht in bekannter Weise durch eine entsprechende Menge an bekannten Kettenabbrechern erzielt wird.

Die Menge an einzusetzenden Kettenabbrechern beträgt im allgemeinen zwischen 0,5 und 10 Mol-%, bezogen auf die Summe der jeweils eingesetzten Diphenole.

Die erfindungsgemäß geeigneten Polycarbonate gemäß Komponente A haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Die relativen Lösungsviskositäten, gemessen in Methylenchlorid als Lösungsmittel bei 25°C bei einer Konzentration von 0,5 g/100 ml, der erfindungsgemäß geeigneten Polycarbonate bewegen sich üblicherweise im Bereich von 1,18 bis 1,34.

Die PIB-modifizierten Polycarbonate werden z.B. hergestellt, indem man bei der Herstellung der Polycarbonate 1 bis 40 Gew.-%, bezogen auf das Gesamtpolymer Polyisobutylentelechele mit Carboxy-Endgruppen zusetzt oder durch Behandeln von Polycarbonaten mit Polyisobutylentelechelen in Lösung (Lösungsmittel z.B. Chlorbenzol) bei Temperaturen im allgemeinen von 120 bis 200°C oder in der Schmelze bei Temperaturen im allgemeinen von 220 bis 340°C oder durch Eindampfen einer Lösung (Lösunsmittel beispielsweise Chlorbenzol oder Methylenchlorid) von Polycarbonaten und Polyisobutylentelechelen in Ausdampfextrudern. Die Herstellung in der Schmelze kann auch in situ beim Mischen der Komponenten A - F erfolgen, indem der Mischung statt Komponente A ein Gemisch aus Polycarbonat und PIB-Telechel zugesetzt wird.

Komponente B

Bevorzugte Pfropfgrundlagen sind Polybutadiene, Butadien/Styrol-Copolymerisate und Acrylatkautschuke. Die Pfropfgrundlage ist teilchenförmig und hat in der Regel einen mittleren Teilchendurchmesser ($d_{50}$) von 0,05 bis 5 µm, vorzugsweise 0,1 bis 0,8 µm.

Die Pfropfgrundlage kann neben Butadien bis zu 50 Gew.-% Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage besteht aus reinem Polybutadien.

Bevorzugte Pfropfpolymerisate B sind z.B. mit Styrol und/oder Acrylnitril und/oder (Meth-)Acrylsäurealkylestern gepfropfte Grundlagen B.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Acrylatkautschuke (Pfropfgrundlage B.2) sind vorzugsweise Polymerisate aus Acrylsäurealkylestern, gegebenenfalls mit bis zu 40 Gew.-% anderer polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Die Menge der vernetzten Monomere beträgt vorzugsweise 0,02 bis 5, insbesondere 0,05 bis 2 Gew.-%, bezogen auf die Pfropfgrundlage.

Komponente C

Als Kautschuke gemäß Komponente C werden gegebenenfalls vorzugsweise Ethylen-Vinylacetat-Copolymere, Polyisobutylenkautschuke, epoxyfunktionelle Ethylen-Acrylat-Terpolymere, besonders bevorzugt Polyisobutylen-Kautschuke eingesetzt.

Die Ethylen-Vinylacetat-Copolymeren weisen Vinylacetat-Gehalte von 20 bis 80 Gew.-% auf. Die epoxyfunktionellen Ethylen-Acrylat-Copolymeren haben einen Ethylengehalt von 60 bis 90 Gew.-%, einen Acrylatgehalt von 8 bis 38 Gew.-% und einen Anteil an epoxyfunktionellen Monomer, vorzugsweise Polyacrylmethacrylat von 2 bis 15 Gew.-%. Die Polyisobutylenkautschuke bestehen zu 85 bis 100 Gew.-% aus kationisch polymerisiertem Isobuten, dem 0 bis 15 Gew.-% Comonomere, wie z.B. Diene, m/p-Methylstyrol, Styrol, α-Methylstyrol oder Divinylbenzol, zugesetzt sein können. Das Molekulargewicht (Gewichtsmittel) $\overline{M}w$ beträgt 200.000 bis 2.000.000.

Komponente D

Das thermoplastische Polymer D umfaßt Homopolymere oder Copolymere von einem oder mehreren ethylenisch ungesättigten Monomeren (Vinylmonomeren) wie beispielsweise Styrol, α-Methylstyrol, kernsubstituierte Styrole Acrylnitril, Methacrylnitril, Methylmethacrylat, Maleinsäureanhydrid, N-substituierte Maleinimide und (Meth)-Acrylsäureester mit 1 bis 18 C-Atomen in der Alkoholkomponente.

Die Copolymerisate gemäß Komponente D sind harzartig, thermoplastisch und kautschukfrei.

Bevorzugte Vinyl-Copolymerisate D sind solche aus wenigstens einem Monomeren aus der Reihe Styrol, α-Methylstyrol und/oder kernsubstituiertem Styrol (D.1) mit wenigstens einem Monomeren aus der Reihe Acrylnitril, Methacrylnitril, Methylmethacrylat, Maleinsäureanhydrid und/oder N-substituiertem Maleinimid (D.2).

Besonders bevorzugte Copolymerisate D sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente D sind bekannt und lassen sich durch radikalische Polymerisation, insbesondere durch Emulsions-, Suspensions-, Lösungs- oder Massepolymerisation herstellen. die Copolymerisate gemäß Komponente D besitzen vorzugsweise Molekulargewichte $\overline{M}_w$ (Gewichtsmittel, ermittelt durch Lichtstreuung oder Sedimentation) zwischen 15 000 und 200 000.

Falls die Mischung Copolymerisate gemäß Komponente C enthält, werden vorzugsweise 5 bis 20 Gew.-% (bezogen auf 100 Teile A + D + C + D + E + F) zugesetzt.

<u>Komponente E</u>

Die aromatischen Polycarbonate, die der Mischung zugesetzt werden können, entsprechen den bei der Komponente A) beschriebenen Polycarbonaten. Bevorzugt sind auch solche Formmassen, die die Komponenten A), B), E) und gegebenenfalls D) enthalten. Bevorzugt haben diese thermoplastischen Formmassen folgende Zusammensetzung:

A) 10 bis 30 Gew.-Teile mit Polyisobutylen modifiziertes Polycarbonat
B) 10 bis 40, vorzugsweise 10 bis 30 Gew.-Teile Pfropfpolymerisat einer Mischung aus o.g. B.1.1 und B.1.2 auf B.2
E) 20 bis 70 Gew.-Teile Polycarbonat und gegebenenfalls
D) 5 bis 25 Gew.-Teile Copolymerisat aus o.g. D.1 und D.2.

<u>Komponente F</u>

Erfindungsgemäß geeignete Polyolefine sind Polymere von aliphatischen ungesättigten Kohlenwasserstoffen, wie beispielsweise Ethylen, Propylen oder Butylen, die nach üblichen Verfahren, z.B. Radikalpolymerisation, erhalten werden und mittlere Gewichtsmittel-Molekulargewichte $\overline{M}_w$ (gemessen nach gelchromatographischen Methoden) zwischen 5 000 und 3 000 000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat, Acrylsäure oder Acrylsäureester in bekannter Weise copolymerisiert sein, wobei der Anteil an Vinylmonomeren maximal 30 Gew.-%, vorzugsweise 25 Gew.-%, beträgt.

Falls Polyolefine der Mischung zugesetzt werden, werden sie bevorzugt in einer Menge von 3 bis 15 Gew.-%, bezogen auf 100 aus A + B + C + D + E + F zugesetzt.

Die Mischung der Komponenten A), B), C), D), E) und F) erfolgt durch Mischen in der Schmelze in Knetern oder Extrudern bei erhöhter Temperatur, im allgemeinen bei Temperaturen von 230 bis 330°C.

Die erfindungsgemäßen Mischungen aus den Komponenten können noch die üblichen, für Polycarbonate bzw. Butylkautschuke üblichen Additive zugesetzt enthalten, wie z.B. Stabilisatoren, Entformungsmittel, Alterungsschutzmittel, Flammschutzmittel, Pigmente, Farbstoffe etc. Diese Additive können wahrend der Herstellung der Mischungen zu beliebigen Formkörpern in üblichen Mengen zugesetzt werden.

Die erfindungsgemäßen Formmassen können zur Herstellung von Formkörpern jeder Art, z.B. durch Spritzgießen, verwendet werden. Beispiele für Formkörper sind Gehäuse von Haushaltsgeräten und elektrischen Geräten.

Gegenstand der Erfindung ist daher auch die Verwendung der Formmassen zur Herstellung von Formkörpern.

Die einzelnen Komponenten der Mischung können ganz oder teilweise aus Recyclaten oder Produktionsabfällen bestehen.

## <u>**Beispiele**</u>

<u>Komponente A</u>

<u>Komponente A.1</u>

a) Herstellung eines Polyisobutylentelechels mit Carboxylendgruppe

1 kg Isobutylen-Isopren-Kautschuk mit einem Isoprengehalt von 2,1 Mol-% und einer Mooney-Viskosität von 47 (ML8, 100°C) (Polysar Butyl 402, Handelsprodukt der Bayer AG) werden in grobe Stücke (ca. 2 cm Durchmesser) zerkleinert und in 4 l Hexan suspendiert. In die Mischung wird unter Rühren bei 15 bis 25°C ein mit Ozon angereicherter Sauerstoffstrom (300 l/h, Ozonmenge ca. 10 g/h) eingeleitet, bis eine Säurezahl von 17 erreicht ist. Die erforderliche Einleitzeit beträgt hierfür 6 Stunden. Bezogen auf den Isoprengehalt im Butylkautschuk beträgt die eingeleitete Ozonmenge ca. 3 Mol pro Mol Isopren. Während des Einleitens lösen sich die festen Anteile vollständig auf. Nach Spülen mit Stickstoff wird kurz mit 5 g Aktivkohle ausgerührt, filtriert und das Lösemittel abdestilliert. Im IR-Spektrum des zurückbleibenden farblosen Öls erscheint eine starke Bande bei 1720 $cm^{-1}$. Nach Neutralisation

können die Absorptionen für die Ketogruppe (1720 $cm^{-1}$) und die Carboxylatgruppen (1560 $cm^{-1}$) differenziert werden. Die am Vakuum vom Lösemittel befreite Probe besitzt ein Molgewicht Mn von 3600 (GPC-Analyse). Die Carboxylfunktionalität errechnet sich mit der bestimmten Säurezahl von 17 mg KOH/g zu 1,09 mol COOH pro Mol Polymer.

b) Herstellung des mit Polyisobutylen modifizierten Polycarbonats
Die Mischung aus 5 870 g 45 % NaOH, 35 l Wasser, 3 238 g Bisphenol-A, 74 g Isooctylphenol, 400 g des unter a) genannten säureterminierten PIB-Telechels, 11 kg Chlorbenzol und 25 l Methylenchlorid wird mit 2 200 g Phosgen phosgeniert. Die anschließende Polykondensation wird mit 20 ml N-Ethylpiperidin katalysiert. Die Reaktionslösung wird auf dem Ausdampfextruder (ZSK 32) eingedampft.

Man erhält ein PC-PIB-Blockcokondensat mit 10 Gew.-% Polyisobutylen-Anteil und einer relativen Lösungsviskosität von $\eta_{rel}$ = 1,28 (0,5 % in Methylenchlorid bei 25°C).

Komponente A.2

a) 400 g Isobutylen-Isopren-Kautschuk mit einem Isoprengehalt von 1,6 Mol-% und einer Mooney-Viskosität von 51 (ML 1+8, 125°C) (Polysar Butyl 301, Handelsprodukt Polysar) werden in 1,5 l Petrolether gelöst. In die Lösung wird unter Rühren bei 0 bis 10°C ein mit Ozon angereicherter Sauerstoffstrom (50 l/h, Ozonmenge ca. 4 g/h) eingeleitet, bis die berechnete Menge Ozon (2,75 g) aufgenommen ist. Nach Spülen mit Stickstoff wird eine Lösung von 5 g Natriumborhydrid in 20 ml 50%igem Ethanol unter starkem Rühren zugegeben und solange gerührt, bis mit Iod-Stärke-Papier keine Peroxide mehr nachweisbar sind. Die wäßrige Phase wird abgetrennt und die organische Phase über Natriumsulfat getrocknet und das Lösemittel abdestilliert. Im IR-Spektrum des zurückbleibenden Öls erscheint eine starke Bande bei 1720 $cm^{-1}$.

Dieses Öl wird in 500 ml Tetrahydrofuran gelöst und unter Zusatz von 20 g Raney-Nickel und 200 g Methylamin bei 150°C und 150 bar Wasserstoffdruck hydriert, bis die IR-Bande bei 1720 $cm^{-1}$ verschwunden ist. Nach Filtration wird das Lösemittel abdestilliert. Das entstandene $NHCH_3$-terminierte Polymer hat eine Aminzahl von 29 (methylaminoterminiertes PIB-Telechel).

b) Herstellung des mit Polyisobutylen modifizierten Polycarbonats
Man löst 1,8 kg Polycarbonat mit $\eta_{rel}$ = 1,28 in 4 l Chlorbenzol und 8 l Methylenchlorid und 200 g des unter a) genannten methylaminoterminierten PIB-Telechels in 1 l Chlorbenzol, mischt beide Lösungen und dampft sie in Ausdampfextruder (ZSK 32) ein (Endtemperatur 300°C).

Komponente B

Pfropfpolymerisat von 45 Gew.-Teilen eines Copolymerisats aus Styrol und Acrylnitril mit Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

Komponente D

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

Komponente E

Lineares Polycarbonat auf Basis Bisphenol A mit einer relativen Lösungsviskosität von 1,2547, gemessen in $CH_2Cl_2$ als Lösungsmittel bei 25°C und in einer Konzentration von 0,5 g/100 ml.

Komponente F

Polyethylen niedriger Dichte (LDPE), Lupolen 1810 E® der Fa. BASF.

**Herstellung und Prüfung der Blends**

Die Herstellung der Blends erfolgte im diskontinuierlichen Kneter in der Schmelze. Die erfindungsgemäßen Mischungen und die Vergleichsversuche wurden auf Kerbschlagzähigkeit (ak) nach DIN 53 543 geprüft. Die Abspritztemperatur der Prüfstäbe beträgt 240, 260 und 280°C.

**Tabelle 1**

Zusammensetzung der Formmassen
(Angaben in Gew.-%)

| Komponenten / Beispiel | A1 | A2 | B | D | E | F |
|---|---|---|---|---|---|---|
| 1 | 24 | | 20 | 16 | 40 | |
| 2 (Vergleich) | - | | 24 | 16 | 60 | |
| 3 | 16,5 | | 30 | 40 | - | 13,5 |
| 4 (Vergleich) | - | | 30 | 40 | 15 | 15 |
| 5 | | 24 | 20 | 16 | 40 | |
| 6 | | 24* | 20 | 16 | 40 | |

*Die Komponente A2 wird nicht als solche zugesetzt, sondern es werden 21,6 Gew.-% Polycarbonat (rel = 1,28) und 2,4 Gew.-% methylamino-terminiertes PIB-Telechel mit den übrigen Komponenten gemischt, wobei die Komponente A2 in situ entsteht.

Tabelle 2

| Ergebnisse | | | | |
|---|---|---|---|---|
| Beispiel | $a_k$ 240°C [kJ/m²] | $a_k$ 260°C [kJ/m²] | $a_k$ 280°C [kJ/m²] | Vicat B [°C] |
| 1 | - | 69,0 | 64 | 122 |
| 2 (Vergleich) | - | 55 | 47 | 121 |
| 3 | 18,3 | - | - | - |
| 4 (Vergleich) | 7 | - | - | - |
| 5 | - | 67 | 64 | 121 |
| 6 | - | 68 | 83 | 122 |

Man sieht beim Vergleich von Beispiel 1 mit Vergleichsbeispiel 2, daß der Blend nach Beispiel 1 eine höhere Zähigkeit aufweist. Ferner ist die Temperaturbeständigkeit erhöht, da der prozentuale Abfall an Zähigkeit bei der höheren

Verarbeitungstemperatur (280°C) geringer ist (bessere Verarbeitungsstabilität). Die Mischungen nach Beispiel 5 und 6 verhalten sich analog Beispiel 1.

Die Zähigkeit von Beispiel 3 ist gegenüber dem Vergleichsbeispiel 4 deutlich erhöht.

## Patentansprüche

**1.** Thermoplastische Formmassen enthaltend

A) 5 bis 90 Gew.-Teile mit Polyisobutylen modifiziertes aromatisches Polycarbonat, wobei der Gewichtsanteil an Polyisobutylen-Telechelen im Gesamtpolymer 1 bis 40 Gew.-% beträgt,
B) 10 bis 95 Gew.-Teile Pfropfpolymerisat einer Mischung aus

B.1.1 50 bis 95 Gew.-Teilen Styrol, α-Methylstyrol, halogen- oder methylkernsubstituiertem Styrol, $C_1$-$C_8$-Alkylmethacrylat, oder Mischungen dieser Verbindungen und
B.1.2 5 bis 10 Gew.-Teilen Acrylnitril, Methacrylnitril, $C_1$-$C_8$-Alkylmethacrylaten, $C_1$-$C_8$-Alkylacrylat, Maleinsäureanhydrid, $C_1$-$C_4$-alkyl- bzw. phenyl-N-substituierte Maleinimide oder Mischungen dieser Verbindungen auf
B.2 5 bis 95 Gew.-Teilen Polymerisat auf Dien- und/oder Alkylacrylat-Basis mit einer Glasübergangstemperatur unter -10°C.

C) 0 bis 20 Gew.-Teile Kautschuk verschieden von B)
D) 0 bis 70 Gew.-Teile eines Copolymerisats aus

D.1 50 bis 98 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und
D.2 50 bis 2 Gew.-Teilen Acrylnitril, Methacrylnitril, $C_1$-$C_8$-Alkylmethacrylaten, $C_1$-$C_8$-Alkylacrylaten, Maleinsäureanhydrid, N-substituierten Maleinimiden und Mischungen daraus,

E) 0 bis 80 Gew.-Teile aromatisches Polycarbonat,
F) 0 bis 40 Gew.-Teile Polyolefine,

wobei die Summe der Komponenten A + B + C + D + E + F 100 ergibt.

**2.** Thermoplastische Formmassen gemäß Anspruch 1, wobei es sich bei dem Polyisobutylen um funktionalisierte Polyisobutylentelechele mit im wesentlichen einer Carbonsäure und einer Ketogruppe, im wesentlichen 2 Aminogruppen, primäres oder sekundäres Alkylamino, mit im wesentlichen 2 Hydroxygruppen handelt oder mit im wesentlichen 2 Asparaginsäureestergruppen.

**3**. Thermoplastische Formmassen gemäß Anspruch 2, wobei die Polyisobutylentelechele 1,8 bis 2,5 funktionelle Gruppen pro Polymerkette enthalten.

**4.** Thermoplastische Formmassen gemäß Anspruch 1 mit folgender Zusammensetzung:

A) 10 bis 30 Gew.-Teile mit Polyisobutylen modifiziertes Polycarbonat
B) 10 bis 40 Gew.-Teile Pfropfpolymerisat
E) 20 bis 70 Gew.-Teile Polycarbonat und gegebenenfalls
D) 5 bis 25 Gew.-Teile Copolymerisat.

**6.** Thermoplastische Formmassen gemäß Anspruch 1, enthaltend Additive ausgewählt aus der Gruppe der Stabilisatoren, Entformungsmittel, Alterungsschutzmittel, Flammschutzmittel, Pigmente und Farbstoffe.

**7.** Verwendung der thermoplastischen Formmassen gemäß Anspruch 1 zur Herstellung von Formkörpern.

**8.** Formkörper, hergestellt aus thermoplastischen Formmassen gemäß Anspruch 1.